# FASCICULE DE BREVET EUROPEEN

(11) **EP 0 872 370 B1**
(45) Date de publication et mention de la délivrance du brevet: **28.08.2002**
(21) Numéro de dépôt: 98106457.9
(22) Date de dépôt: 08.04.1998
(51) Int. Cl.: B60K 15/04

(54) **Dispositif de remplissage d'un réservoir de carburant pour un véhicule automobile comportant une tête de remplissage à armature de renfort**
Einfüllvorrichtung für einen Kraftstofftank eines Kraftfahrzeuges mit verstärkter Rahmeneinlage im Tankverschlussdeckel
Filler device for a fuel tank of motor vehicle comprising a fuel tank cap with a reinforced armature

(30) Priorité: 14.04.1997 FR 9704658
(43) Date de publication de la demande: 21.10.1998
(73) Titulaire: Compagnie de Matériel et d'Equipements Techniques C.O.M.E.T., 60300 Senlis (FR)
(72) Inventeur: Romanek, Christian, 60430 Noailles (FR); Lefevre, Jean-Pierre, 60240 Lattainville (FR)
(74) Mandataire: Rinuy, Santarelli

(56) Documents cités:
- EP-A- 0 523 291
- EP-A- 0 621 153
- FR-A- 2 588 806
- FR-A- 2 710 721

## Description

L'invention concerne un dispositif de remplissage d'un réservoir de carburant pour un véhicule automobile comportant une tête de remplissage à armature de renfort.

L'invention concerne plus particulièrement un dispositif de remplissage d'un réservoir de carburant pour véhicule automobile, du type comportant une tubulure de remplissage dont une extrémité supérieure est reliée à une tête de remplissage qui comporte un orifice supérieur pour l'introduction de la lance d'un pistolet de ravitaillement, et du type dans lequel la tête de remplissage comporte un volet qui est articulé entre une position fermée, dans laquelle il obture l'orifice supérieur de la tête, et une position ouverte.

Un dispositif de ce type est connu du document FR-2 710 721.

Dans un tel type de dispositif de remplissage, le fait que le volet d'obturation soit articulé sur la tête de remplissage nécessite de prévoir que celle-ci puisse encaisser les efforts d'ouverture et de fermeture du volet, et ce pour un nombre de cycles relativement important afin de couvrir la durée de vie du véhicule.

Notamment, le volet étant articulé par une charnière sur la tête de remplissage, il faut que cette charnière soit particulièrement résistante et que sa fixation par rapport à la tête de remplissage n'impose pas de contraintes trop importantes à celle-ci sous peine de la déformer.

De la sorte, de telles contraintes peuvent rendre obligatoire l'utilisation, pour la réalisation de la tête de remplissage, de matériaux particulièrement rigides, par exemple des matières plastiques à haute performance, voire même du métal.

Or, ces matériaux, choisis pour leur résistance mécanique, peuvent ne pas être adaptés à d'autres contraintes telles qu'un aspect esthétique particulier, une résistance à certaines formes de corrosion, ou un prix de revient suffisamment bas.

Par ailleurs, de la nature du matériau constituant la tête de remplissage dépendent les moyens de réalisation de l'assemblage de la tête de remplissage à l'extrémité de la tubulure de remplissage. Cette dernière étant généralement réalisée en polyéthylène à haute densité (PEHD), il est particulièrement intéressant de pouvoir utiliser une tête de remplissage réalisée au moins en partie en un matériau qui puisse être assemblé au PEHD par thermosoudage, et notamment par la technique du soudage "miroir", ce qui permet d'assurer une très bonne étanchéité de l'assemblage afin d'éviter que des vapeurs de carburant contenues dans le dispositif de remplissage ne s'évaporent dans l'atmosphère.

L'invention a donc pour but de proposer une nouvelle conception d'un dispositif de remplissage pour un réservoir de carburant qui comporte une tête d'entraînement susceptible de satisfaire à la fois aux critères de résistance mécanique imposés pour l'articulation du volet d'obturation, et à des critères de facilité d'assemblage qui déterminent la nature des matériaux susceptibles d'être utilisé pour réaliser la tête de remplissage.

A cet effet, l'invention propose un dispositif de remplissage d'un réservoir de carburant pour véhicule automobile, selon les caractéristiques de la revendication 1.

Selon d'autres caractéristiques de l'invention :
- la tubulure de remplissage et le corps principal de la tête de remplissage sont réalisés en matière plastique et sont assemblés l'un à l'autre par soudage ;
- le corps principal de la tête de remplissage est surmoulé autour d'une partie au moins de l'armature de renfort ;
- le corps principal comporte un corps d'ancrage, autour duquel est surmoulé le corps principal, et un corps de charnière sur lequel est articulé le volet, et le corps de charnière s'étend en dehors du corps principal de la tête de remplissage ;
- la tête de remplissage détermine, avec la tubulure de remplissage, une enceinte fermée lorsque le volet d'obturation est en position fermée, et le corps de charnière de l'armature de renfort s'étend soit à l'intérieur, soit à l'extérieur, de l'enceinte ;
- le corps de charnière s'étend à l'intérieur de l'enceinte fermée délimitée par la tête de remplissage et la tubulure ;
- le corps principal de la tête de remplissage comporte essentiellement une paroi latérale cylindrique, dont une extrémité inférieure est reliée à la tubulure de remplissage, et une paroi transversale qui est agencée à l'extrémité opposée supérieure de la paroi cylindrique et qui comporte l'orifice supérieur, et le corps d'ancrage de l'armature de renfort comporte un collet annulaire qui est noyé dans la paroi transversale et qui entoure l'orifice supérieur ;
- la tubulure de remplissage et le corps principal de la tête de remplissage sont réalisés en polyéthylène à haute densité et sont assemblés l'un à l'autre par soudage miroir.

D'autres caractéristiques et avantages de l'invention apparaîtront à la lecture de la description détaillée qui suit pour la compréhension de laquelle on se reportera aux dessins annexés dans lesquels :
- la figure 1 est une vue schématique en coupe axiale d'un dispositif de remplissage conforme aux enseignements de l'invention ; et
- la figure 2 est une vue en coupe axiale de la tête de remplissage du dispositif de remplissage de la figure 1.

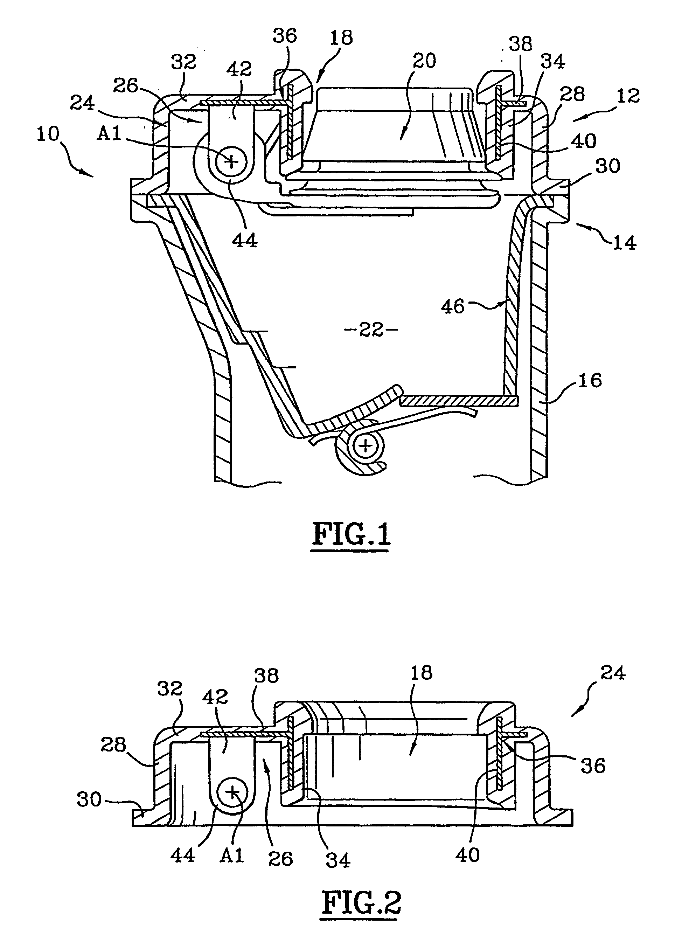

Comme on peut le voir sur les figures 1 et 2, le dispositif de remplissage 10 selon l'invention comporte essentiellement une tête de remplissage 12 qui est fixée à l'extrémité supérieure 14 d'une tubulure de remplissage 16 dont l'extrémité opposée inférieure (non représentée) est destinée à être reliée à un réservoir de carburant du véhicule automobile.

De manière connue, la tête de remplissage 12 comporte un orifice supérieur 18 au travers duquel est destinée à être introduite la lance d'un pistolet de ravitaillement (non représenté) lorsque l'on veut remplir le réservoir de carburant.

L'orifice supérieur 18 est ici destiné à être obturé par un volet 20 qui est articulé autour d'un axe transversal A1 sensiblement perpendiculaire à la direction axiale générale de la tubulure 16, et qui est destiné à être escamoté vers l'intérieur dans une enceinte 22 délimitée par la tubulure 16 et par la tête de remplissage 12.

Lorsque le volet 20 est en position fermée, tel que représenté sur la figure 1, l'enceinte 22 est fermée de manière étanche, ce qui empêche que les vapeurs de carburant contenues dans le réservoir et dans le dispositif de remplissage 10 ne puissent s'échapper vers l'atmosphère.

Conformément aux enseignements de l'invention, la tête de remplissage 12 comporte essentiellement un corps principal 24 qui est réalisé en matière plastique et qui est surmoulé au moins en partie autour d'une armature de renfort 26 sur laquelle est articulé le volet d'obturation 20.

En effet, dans le mode de réalisation de l'invention représenté sur les figures, la tête de remplissage 12 comporte essentiellement une paroi cylindrique axiale 28 dont une extrémité axiale inférieure 30 est assemblée par soudage "miroir" avec la tubulure 16. A l'extrémité opposée supérieure de la paroi cylindrique 28, le corps principal 24 comporte une paroi transversale supérieure 32 dans laquelle est aménagé l'orifice supérieur 18 qui est délimité, dans ce mode de réalisation, par une douille annulaire axiale 34 dans laquelle est reçu le volet 20 lorsqu'il est en position fermée.

Comme on peut le voir sur les figures, l'armature de renfort 26 comporte un corps d'ancrage 36 qui est noyé dans la paroi transversale supérieure 32 et dans la douille 34 qui délimite l'orifice supérieur 18.

Ainsi, le corps d'ancrage 36 présente une forme annulaire autour de l'axe de l'orifice supérieur 18 et présente en section par un plan radial une forme d'équerre. Le corps d'ancrage 36 comporte un collet transversal annulaire 38, qui est noyé dans la plaque transversale supérieure 32, et un tronçon tubulaire axial 40 qui s'étend vers le bas depuis un bord circulaire interne du collet 38 et qui est noyé dans la douille 34 du corps principal 24 de la tête de remplissage 12.

Comme on peut le voir sur les figures, le corps d'ancrage 36 est entièrement noyé dans le corps principal 24 et n'apparaît jamais à la surface de celui-ci.

Au contraire, l'armature de renfort 26 comporte aussi un corps de charnière 42, ici réalisé sous la forme d'au moins une plaque qui s'étend verticalement vers le bas depuis le collet transversal, à l'intérieur de l'espace 22, et qui s'étend en dehors du corps principal 24 de la tête de remplissage 12. Le corps de charnière 42 porte ainsi à rotation, à son extrémité libre 44, le volet d'articulation 20.

L'armature de renfort 26 est ici réalisée sous la forme d'un insert métallique mais elle peut aussi être réalisée sous la forme d'une pièce en matériau composite à haute résistance mécanique. L'armature 26 est ainsi susceptible de résister aux efforts résultant de l'ouverture et de la fermeture du volet d'obturation 20.

Au contraire, le corps principal 24 de la tête de remplissage 12 est réalisé en une matière plastique qui peut être choisie d'une part en fonction de sa compatibilité avec le matériau constituant la tubulure de remplissage 16, et d'autre part, en fonction d'autres caractéristiques telles que son prix de revient, son aptitude au moulage, ou par exemple des considérations d'ordre esthétique.

On pourra par exemple choisir de réaliser le corps principal 24 avec le même matériau que la tubulure 16, par exemple en polyéthylène à haute densité (PEHD).

Dans l'exemple de réalisation selon l'invention qui est représenté sur la figure 1, le dispositif 10 comporte aussi un cône de détrompage 46 qui est agencé à l'intérieur de l'enceinte fermée 22 et qui est réalisé en matière plastique de manière à pouvoir être assemblé par soudage, en même temps que la tubulure 16, avec la tête de remplissage 12.

A cet effet, la technique du soudage "miroir" consiste à chauffer les surfaces de liaison respectives des différentes pièces à assembler avant de les approcher l'une de l'autre jusqu'à les amener en contact.

Ainsi, la matière de ces surfaces, en fusion, se "mélange" et réalise le soudage des pièces amenées au contact l'une de l'autre.

Selon un aspect particulièrement avantageux de l'invention, l'enceinte fermée 22 délimitée par la tubulure 16, la tête de remplissage 12 et le volet d'obturation 20 est parfaitement étanche. Ainsi, l'agencement de l'armature de renfort 26 dans le corps principal 24 est conçu de manière à ne pas permettre d'évaporation vers l'extérieur de l'enceinte 22 de vapeurs d'essence.

Il est en effet possible que des vapeurs d'essence, extrêmement volatiles, s'infiltrent au niveau de l'interface entre l'armature 26 et le corps principal 24. Cette infiltration ne peut s'effectuer que dans la zone de cette interface qui est au contact des vapeurs d'essence, c'est-à-dire au niveau du corps de charnière 42 qui s'étend en dehors du corps principal 24.

Toutefois, une telle infiltration qui pourrait se propager au niveau de l'interface entre d'une part l'armature 26, et plus particulièrement le corps d'ancrage 36, et d'autre part le corps principal 24, ne peut en aucun cas accéder à l'extérieur de l'enceinte 22 du fait que le corps d'ancrage 36 ne débouche en aucun point au niveau des surfaces externes du corps principal 24 de la tête de remplissage 12.

Dans l'exemple de réalisation de l'invention qui vient d'être décrit, le corps de charnière 42 s'étend à l'intérieur de l'enceinte 22. On peut aussi mettre en oeuvre l'invention en prévoyant que le corps de charnière s'étende à l'extérieur de l'enceinte 22, par exemple si le volet s'escamote vers sa position ouverte à l'extérieur de la tête de remplissage. L'essentiel est que le corps de charnière ne débouche pas à la fois à l'intérieur et à l'extérieur de l'enceinte 22 sous peine de devoir prévoir des moyens complémentaires d'étanchéité.

Dans l'exemple de réalisation décrit et représenté, l'étanchéité aux infiltrations de vapeur d'essence est réalisée grâce au fait que l'armature 26 et le corps d'ancrage 36 ne dépassent en aucun point la surface extérieure du corps principal 24.

Lors de l'opération de surmoulage, il est nécessaire d'assurer le maintien et le positionnement du corps d'ancrage 36 dans le moule. Pour résoudre ce problème la branche horizontale du corps d'ancrage 36 sur laquelle vient se raccorder le corps de charnière 42 est prolongée de manière à faire saillie hors de la surface externe du corps principal 24.

Dans cette configuration, pour assurer une étanchéité correcte, le corps de charnière 42 est également surmoulé de manière à constituer sur la surface intérieure du corps 24, une couche continue de matière plastique.

Grâce aux enseignements de l'invention, il est donc possible de réaliser à bas prix un dispositif de remplissage qui présente toutes les garanties d'étanchéité et de résistance mécanique lui assurant une durée de vie importante.

## Revendications

1. Dispositif de remplissage d'un réservoir de carburant pour véhicule automobile, du type comportant une tubulure de remplissage (16) dont une extrémité supérieure est reliée à une tête de remplissage (12) qui comporte un orifice supérieur (18) pour l'introduction de la lance d'un pistolet de ravitaillement, et du type dans lequel la tête de remplissage (12) comporte un volet (20) qui est articulé entre une position fermée, dans laquelle il obture l'orifice supérieur (18) de la tête (12), et une position ouverte, la tête de remplissage (12) comportant un corps principal (24) réalisé en matière plastique et qui est relié à la tubulure de remplissage (16), **caractérisé en ce que** la tête de remplissage comporte une armature de renfort (26) du corps principal (24), sur laquelle est articulé le volet d'obturation (20), ladite armature de renfort (26) étant solidaire du corps principal (24) en étant au moins partiellement noyée dans celui-ci, et réalisée dans un matériau métallique ou composite à haute résistance mécanique.

2. Dispositif de remplissage selon la revendication 1, **caractérisé en ce que** la tubulure de remplissage (16) et le corps principal (24) de la tête de remplissage (12) sont réalisés en matière plastique et sont assemblés l'un à l'autre par soudage.

3. Dispositif de remplissage selon l'une des revendication 1 ou 2, **caractérisé en ce que** le corps principal (24) de la tête de remplissage (12) est surmoulé autour d'une partie au moins de l'armature de renfort (26).

4. Dispositif de remplissage selon la revendication 3, **caractérisé en ce que** le corps principal (24) comporte un corps d'ancrage (36), autour duquel est surmoulé le corps principal (24), et un corps de charnière (42) sur lequel est articulé le volet (20), et **en ce que** le corps de charnière (42) s'étend en dehors du corps principal (24) de la tête de remplissage (12).

5. Dispositif de remplissage selon la revendication 4, **caractérisé en ce que** la tête de remplissage (12) détermine, avec la tubulure de remplissage (16), une enceinte fermée (22) lorsque le volet d'obturation (20) est en position fermée, et **en ce que** le corps de charnière (42) de l'armature de renfort (26) s'étend soit à l'intérieur, soit à l'extérieur, de l'enceinte.

6. Dispositif de remplissage selon la revendication 5, **caractérisé en ce que** le corps de charnière (42) s'étend à l'intérieur de l'enceinte fermée (22) délimitée par la tête de remplissage (12) et la tubulure (16).

7. Dispositif de remplissage selon l'une quelconque des revendications 4 à 6, **caractérisé en ce que** le corps principal (24) de la tête de remplissage (12) comporte essentiellement une paroi latérale cylindrique (28), dont une extrémité inférieure (30) est reliée à la tubulure de remplissage (16), et une paroi transversale (32) qui est agencée à l'extrémité opposée supérieure de la paroi cylindrique (28) et qui comporte l'orifice supérieur (18), et **en ce que** le corps d'ancrage (36) de l'armature de renfort (26) comporte un collet annulaire (38) qui est noyé dans la paroi transversale (32) et qui entoure l'orifice supérieur (18).

8. Dispositif de remplissage selon l'une quelconque des revendications précédents, **caractérisé en ce que** la tubulure de remplissage (16) et le corps principal (24) de la tête de remplissage (12) sont réalisés en polyéthylène à haute densité et sont assemblés l'un à l'autre par soudage miroir.

## Claims

1. Filler device for a fuel tank of a motor vehicle, of the type comprising a filler neck (16), an upper end of which is connected to a filler head (12) comprising an upper port (18) for the introduction of the nozzle of a refuelling gun, and of the type in which the filler head (12) comprises a flap (20) hinged between a closed position in which it covers the upper port (18) of the head (12) and an open position, the filler head (12) comprising a main body (24) made of plastic and connected to the filler neck (16), **characterised in that** the filler head comprises a reinforcing member (26) for the main body (24) to which the flap (20) is hinged, the said reinforcing member (26) being integral with the main body (24) and at least partially embedded in the latter and being made of a metal or composite material with high mechanical strength.

2. Filler device according to claim 1, **characterised in that** the filler neck (16) and the main body (24) of the filler head (12) are made of plastic and are joined together by welding.

3. Filler device according to either of claims 1 or 2, **characterised in that** the main body (24) of the filler head (12) is moulded around at least part of the reinforcing member (26).

4. Filler device according to claim 3, **characterised in that** the main body (24) comprises an anchoring body (36) around which the main body (24) is moulded and a hinge body (42) to which the flap (20) is hinged and **in that** the hinge body (42) extends outside the main body (24) of the filler head (12).

5. Filler device according to claim 4, **characterised in that** the filler head (12) and the filler neck (16) together define a closed enclosure (22) when the flap (20) is in the closed position and **in that** the hinge body (42) of the reinforcing member (26) extends either inside or outside the enclosure.

6. Filler device according to claim 5, **characterised in that** the hinge body (42) extends inside the closed enclosure (22) delimited by the filler head (12) and the filler neck (16).

7. Filler device according to any one of claims 4 to 6, **characterised in that** the main body (24) of the filler head (12) essentially comprises a cylindrical lateral wall (28), a lower end (30) of which is connected to the filler neck (16), and a transverse wall (32) arranged at the upper opposite end of the cylindrical wall (28) and comprising the upper port (18) and **in that** the anchoring body (36) of the reinforcing member (26) comprises an annular collar (38) embedded in the transverse wall (32) and surrounding the upper port (18).

8. Filler device according to any one of the preceding claims, **characterised in that** the filler neck (16) and the main body (24) of the filler head (12) are made of high-density polyethylene and are joined together by mirror welding.

## Patentansprüche

1. Einfüllvorrichtung für einen Kraftstofftank eines Kraftfahrzeuges, mit einem Einfüllstutzen (16), von dem ein oberes Ende mit einem Einfüllkopf (12) verbunden ist, der eine obere Öffnung zur Einführung des Füllpistolenrohrs aufweist, wobei der Einfüllkopf (12) eine Klappe (20) aufweist, die zwischen einer geschlossenen Stellung, bei der die Klappe (20) die obere Öffnung (18) des Kopfes (12) verschließt, und einer offenen Stellung angelenkt ist, wobei der Einfüllkopf (12) einen aus Kunststoff hergestellten, mit dem Einfüllstutzen (16) verbundenen Hauptkörper (24) aufweist, **dadurch gekennzeichnet, daß** der
Einfüllkopf eine verstärkte Rahmeneinlage (26) des Hauptkörpers (24) aufweist, an der die Verschlußklappe (20) angelenkt ist, wobei die besagte verstärkte Rahmeneinlage (26) mit dem Hauptkörper (24) einstückig verbunden , mindestens teilweise in diesem eingelassen und aus einem metallischen bzw. Verbundstoff mit hoher mechanischer Widerstandsfähigkeit ausgeführt ist.

2. Einfüllvorrichtung nach Anspruch 1, **dadurch gekennzeichnet, daß** der Einfüllstutzen (16) und der Hauptkörper (24) des Einfüllkopfes (12) in Kunststoff ausgeführt und miteinander verschweißt sind.

3. Einfüllvorrichtung nach einem der Ansprüche 1 oder 2, **dadurch gekennzeichnet, daß** der Hauptkörper (24) des Einfüllkopfes (12) mindestens von einem Teil der verstärkten Rahmeneinlage (26) umformt ist.

4. Einfüllvorrichtung nach Anspruch 3, **dadurch gekennzeichnet, daß** der Hauptkörper (24) einen vom Hauptkörper (24) umformten Verankerungskörper (36) und einen Gelenkkörper (42), auf dem die Klappe (20) angelenkt ist, aufweist und daß sich der Gelenkkörper (42) aus dem Hauptkörper (24) des Einfüllkopfes (12) heraus erstreckt.

5. Einfüllvorrichtung nach Anspruch 4, **dadurch gekennzeichnet, daß** der Einfüllkopf (12), mit dem Einfüllstutzen (16), eine geschlossene Einfassung (22) definiert, wenn sich die Verschlußklappe (20) in geschlossener Stellung befindet, und daß sich der Gelenkkörper (42) der verstärkten Rahmeneinlage (26) entweder innerhalb oder außerhalb der Einfassung erstreckt.

6. Einfüllvorrichtung nach Anspruch 5, **dadurch gekennzeichnet, daß** sich der Gelenkkörper (42) innerhalb der durch den Einfüllkopf (12) und den Stutzen (16) abgegrenzten geschlossenen Einfassung (22) erstreckt.

7. Einfüllvorrichtung nach irgendeinem der vorangehenden Ansprüche 4 bis 6, **dadurch gekennzeichnet, daß** der Hauptkörper (24) des Einfüllkopfes (12) im wesentlichen eine seitliche zylindrische Wand (28), deren eines unteres Ende (30) mit dem Einfüllstutzen (16) verbunden ist, und eine am oberen
entgegengesetzten Ende der zylindrischen Wand (28) angeordnete und die obere Öffnung (18) aufweisende Querwand (32) aufweist und daß der Verankerungskörper (36) der verstärkten Rahmeneinlage (26) einen ringförmigen Kragen (38) aufweist, der in der Querwand (32) versenkt ist und die obere Öffnung (18) umgibt.

8. Einfüllvorrichtung nach irgendeinem der vorangehenden Ansprüche, **dadurch gekennzeichnet, daß** der Einfüllstutzen (16) und der Hauptkörper (24) des Einfüllkopfes (12) aus hoch-dichtem Polyäthylen ausgeführt und miteinander spiegelverschweißt sind.
